# FASCICULE DE BREVET EUROPEEN

(11) **EP 4 136 386 B1**
(45) Date de publication et mention de la délivrance du brevet: **18.12.2024**
(21) Numéro de dépôt: 21726439.9
(22) Date de dépôt: 13.04.2021
(51) Int. Cl.: F23R 3/28, F23R 3/50, F23R 3/60, F23R 3/00

(54) **PARTIE DE TURBOMACHINE À GAZ POUR AÉRONEF**
GASTURBINENBAUTEIL FÜR LUFTFAHRZEUG
GAS TURBINE PART FOR AIRCRAFT

(30) Priorité: 17.04.2020 FR 2003878
(43) Date de publication de la demande: 22.02.2023
(73) Titulaire: SAFRAN AIRCRAFT ENGINES, 75015 Paris (FR)
(72) Inventeur: BUNEL, Jacques, Marcel, Arthur, 77550 MOISSY-CRAMAYEL (FR); DOUSSE, William, Louis, Rodolphe, 77550 MOISSY-CRAMAYEL (FR); JOORY, Dan-Ranjiv, 77550 MOISSY-CRAMAYEL (FR); VILLENAVE, Benjamin, Frantz, Karl, 77550 MOISSY-CRAMAYEL (FR)
(74) Mandataire: Ernest Gutmann - Yves Plasseraud S.A.S.
(86) Numéro de dépôt international: PCT/FR2021/050646
(87) Numéro de publication internationale: WO 2021/209711

(56) Documents cités:
- FR-A1- 2 988 436
- US-A1- 2011 120 132
- US-A1- 2013 055 716
- US-A1- 2016 115 874

## Description

### Présentation de l'invention

La présente invention concerne une chambre de combustion pour une turbomachine à gaz, telle qu'un turboréacteur ou un turbopropulseur d'aéronef, dans laquelle des fluides (tels que de l'air et au moins un carburant) circulent globalement d'amont vers l'aval pour la faire fonctionner. Dans le texte, l'amont et l'aval sont à considérer le long de ce que ci-après on appelle « le premier axe » ou « axe X », qui est l'axe général de la turbomachine.

L'amont est le côté par où le mélange d'air et de carburant arrive dans la chambre de combustion. « Externe » et « interne » sont à comprendre comme radialement par rapport audit premier axe (X). Est Externe ce qui est radialement plus éloigné de ce premier axe que ne l'est ce qui est interne.

Ceci précisé, on connaît déjà des parties de turbomachine à gaz pour aéronef présentant un premier axe (X) et comprenant :
- un carter externe,
- un carter interne, tous deux annulaires, coaxiaux audit premier axe (X), et
- un espace entourant une chambre de combustion annulaire autour du premier axe (X), l'espace étant délimité entre le carter externe et le carter interne, la chambre annulaires de combustion comprenant :
- des parois annulaires respectivement interne et externe radialement au premier axe (X),
- un(e) (paroi de) fond de chambre annulaire s'étendant entre lesdites parois annulaires interne et externe et présentant des premières ouvertures de passage de dispositifs d'injection d'un mélange d'air et de carburant au moins pour partie fixés au fond de chambre annulaire,
- un déflecteur, disposé en aval du fond de chambre, pour protéger thermiquement le fond de chambre, et présentant des secondes ouvertures de passage desdits dispositifs d'injection de mélange.

Radialement audit premier axe (X), les parois annulaires interne et externe précitées délimitent le foyer de la chambre de combustion.

En outre, le fond de chambre comporte en fait globalement des orifices de passage du mélange air(A)/carburant(C) vers le foyer de la chambre de combustion, l'air (A) provenant d'un compresseur de la turbomachine et le carburant (C) étant amené par des injecteurs.

Par définition, le fond de chambre (FDC) est l'organe :
- auquel sont fixés lesdits dispositifs d'injection du mélange air/carburant, et
- avec lequel sont fixées lesdites parois annulaires respectivement interne et externe. Il s'agit d'un fond structurel.

Le fond de chambre subit de fortes contraintes thermiques qui peuvent le déformer. Il est donc fréquent de le protéger thermiquement (vis-à-vis de la flamme dans le foyer) par un déflecteur (ou une couronne de déflecteurs) monté(e) juste en aval du FDC.

Malgré cela, des jeux peuvent apparaître (notamment avec lesdites parois annulaires respectivement interne et externe), qui génèrent des problèmes de pollution, de consommation de carburant, et de rallumage de la chambre en cas d'extinction.

Par ailleurs, il faut pouvoir amorcer la combustion du mélange air/carburant dans le foyer de la chambre de combustion, voire lui apporter une quantité additionnelle de carburant, en aval du FDC donc.

Il est connu à cette fin que l'une desdites parois annulaires respectivement interne et externe (typiquement la paroi externe) comporte au moins un orifice de passage vers le foyer d'une extrémité d'(au moins) un élément d'apport d'énergie (bougie d'allumage dudit mélange et/ou injecteur de carburant) dont l'autre extrémité peut être fixée sur un carter externe de la chambre.

En fonctionnement de la turbomachine, les parois de la chambre de combustion se dilatent thermiquement, ce qui engendre des déplacements relatifs entre les pièces.

Pour compenser et autoriser ces déplacements, EP-A-1770332 propose d'utiliser au moins un dispositif de guidage qui comprend, pour guider l'élément d'apport d'énergie considéré dans l'orifice de la paroi annulaire qu'il traverse :
- une bride métallique, et
- une bague flottante, montée flottante dans la bride, la bague flottante et la bride étant traversées coaxialement par l'élément d'apport d'énergie, la bride étant fixée frettée (shrink fit en anglais) ou par une soudure avec ladite parois annulaire, laquelle est typiquement métallique.

L'expression soudure couvre tant les brasures que les réelles soudures.

C'est dans ce contexte que l'invention a ici pour but d'apporter une solution efficace et économique à une partie au moins des problèmes et inconvénients ci-après :
- amélioration de la durée de vie de la chambre (sous-entendu de combustion),
- réduction des fuites gazeuses parasites dans la zone du FDC équipé,
- réduction de la pollution,
- réduction de la consommation de carburant,
- amélioration des conditions d'allumage et de rallumage de la chambre,
- maîtrise de la masse globale de la chambre de combustion,
- maîtrise de la manière de fabriquer la chambre de combustion,
- bonne tenue mécanique,
- amélioration de la résistance aux contraintes thermiques,
- gestion des contacts entre métal et matériau réfractaire (telle qu'une céramique) ; en effet ces contacts rendent complexe la fixation, sur une paroi en matériau réfractaire, du dispositif de guidage de l'élément d'apport d'énergie (dispositif souvent dénommé guide-bougie). Certes, US2013055716 enseigne une partie de turbomachine comme présentée ci-avant et dans laquelle la chambre de combustion comprend :
- des parois en matériau réfractaire, annulaires, respectivement interne et externe radialement au premier axe (X),
- un fond de chambre annulaire s'étendant entre lesdites parois en matériau réfractaire, interne et externe, et présentant des premières ouvertures de passage de dispositifs d'injection d'un mélange d'air et de carburant en partie fixés au fond de chambre annulaire,
- des premiers éléments de liaison métalliques , respectivement interne et externe radialement au premier axe (X), auxquelles sont fixées :
   -- respectivement lesdites parois en matériau réfractaire, et
   -- le fond de chambre,
   la chambre de combustion comprenant en outre:
- deux orifices traversant coaxialement, respectivement (suivant un axe qui pourra intersecter l'axe X) :
   -- l'une des premières parois de liaison métalliques, et
   -- l'une desdites parois en matériau réfractaire qu'elle recouvre, et
- un dispositif de guidage, pour guider un élément d'apport d'énergie dans lesdits deux orifices.

Grâce à l'invention, on évitera notamment une sollicitation mécanique excessive de la paroi annulaire en matériau réfractaire traversée par l'orifice de passage de l'élément d'apport d'énergie considéré et on aura apporté une solution au problème de la fixation, sur une paroi en matériau réfractaire, du dispositif de guidage de l'élément d'apport d'énergie.

A noter aussi que l'aspect monobloc entre ledit déflecteur et lesdites parois annulaires en matériau réfractaire respectivement interne et externe :
- doit permettre d'obtenir une maitrise des tolérances géométriques du foyer, notamment :
   suppression d'opérations de soudure, maintien du volume de la chambre pour respecter des plafonds de rallumage favorable, en cas d'extinction en vol,
- peut éviter d'avoir à utiliser un revêtement formant barrière de protection thermique (notamment en Zirconate d'ytrium),
- implique que ledit « déflecteur » en matériau réfractaire, en devenant le « fond » annulaire du foyer (repéré 21 ci-après) de la chambre de combustion, continue bien à jouer un rôle de déflecteur, protégeant le « fond de chambre » (ou FDC, repéré 20 ci-après) métallique, structurel, et lui-même annulaire, qui n'est ainsi pas directement exposé au rayonnement thermique. Le terme « déflecteur » est donc approprié. L'expression « fond de l'ensemble monobloc » a aussi été employé ci-après pour éviter toute confusion avec le « fond de chambre, ou FDC, 20 ».

Favorablement, un tel ensemble monobloc sera en (c'est-à-dire à base de) matériau réfractaire, qui peut être (pourra comprendre) un composite à matrice céramique (CMC). L'épaisseur de paroi pourrait être entre 0.9mm et 1.6mm.

Pour sécuriser la fixation du dispositif de guidage, il est conseillé que ledit dispositif de guidage comprenne une bride métallique et une bague flottante montée flottante dans la bride, la bague flottante et la bride étant adaptées à être traversées coaxialement par l'élément d'apport d'énergie, la bride étant fixée avec l'une desdites premières parois de liaison métalliques.

Encore pour sécuriser cette fixation, c'est favorablement par frettage (shrink fit) ou par soudure que le dispositif de guidage - la bride si elle est prévue - sera fixé avec l'une desdites premières parois de liaison métalliques.

Par ailleurs, favorablement:
- la chambre de combustion comprendra aussi un déflecteur en matériau réfractaire, disposé (axialement) en aval du fond de chambre, pour le protéger thermiquement, et présentant des secondes ouvertures de passage des dispositifs d'injection de carburant,
- ledit déflecteur et lesdites parois en matériau réfractaire pourront former un ensemble monobloc.

De nouveau pour sécuriser encore davantage la fixation du dispositif de guidage sans solliciter notablement la paroi en matériau réfractaire, il est aussi proposé que soit prévue une bague intermédiaire de fixation :
- fixée, de préférence frettée (shrink fit) ou fixée par une soudure, à la bride et à ladite première paroi de liaison, annulaire, métallique traversée par l'élément d'apport d'énergie considéré, et
- qui sera elle-même traversée par l'élément d'apport d'énergie.

En interposant une telle bague intermédiaire, a priori métallique comme la bride, entre cette bride et ladite première paroi de liaison, aussi métallique, on facilitera le montage du dispositif de guidage dans son ensemble.

Aussi, dans le même but que ci-avant, il est même proposé que :
- la bride présente un fût (appelé aussi cheminée) parallèle à l'axe desdits deux orifices coaxiaux et qui est engagé dans l'orifice de ladite première paroi de liaison métallique traversé par l'élément d'apport d'énergie, et
- la bague de fixation est fixée frettée (shrink fit) ou par une soudure avec cette paroi et ledit fût, en étant interposée donc entre eux.

Il est aussi proposé que, parallèlement à l'axe desdits deux orifices, le fût de la bride s'interrompe à distance de ladite paroi annulaire en matériau réfractaire traversée et qui lui fait face.

Pour là encore faciliter le montage de la bride et limiter le plus possible l'affaiblissement mécanique de la paroi en en matériau réfractaire, il est par ailleurs proposé que, parmi lesdits deux orifices, celui qui traverse ladite première paroi de liaison métallique considérée présente un plus grand diamètre que celui qui traverse coaxialement la paroi en matériau réfractaire située en regard.

En d'autres termes, l'orifice présent dans l'une des premières parois de liaison métalliques présentera avantageusement un diamètre (D2) plus grand que le diamètre (D1) de l'orifice présent dans l'une desdites parois annulaires en matériau réfractaire.

Pour limiter l'interférence entre la bague de fixation et cette paroi en matériau réfractaire, il est aussi proposé :
- que la bague de fixation présente un diamètre intérieur (D1), un diamètre extérieur (D2) et une épaisseur (e) entre les diamètres intérieur (D1) et extérieur (D2), et
- que la différence de diamètres entre lesdits deux orifices soit supérieure à l'épaisseur (e) de la bague de fixation.

Ainsi, la bague de fixation ne débordera pas dans l'espace des orifices réservé au débattement possible de l'élément d'apport d'énergie.

Pour par ailleurs positionner au mieux la bride et là encore faciliter son montage, il est aussi proposé que, parallèlement à l'axe desdits deux orifices, la bague de fixation présente une hauteur (H1) supérieure à la hauteur du fût, pour éviter un contact éventuel entre le métal et le matériau réfractaire (la céramique).

La hauteur (H1) la bague de fixation pourra aussi être supérieure à l'épaisseur de ladite première paroi de liaison métallique à laquelle elle est donc fixée et qui l'entoure de façon adjacente.

Ainsi dressée, de préférence radialement vers l'extérieur au-dessus de cette première paroi de liaison métallique, la bague pourra notamment servir d'appui pour le montage du dispositif de guidage de l'élément d'apport d'énergie considéré.

A ce sujet, il est même proposé qu'en situation opérationnelle, le fût de la bride soit en appui contre la bague de fixation, via un évasement présent sur la bride.

Plus précisément, à cette fin d'appui et/ou de débattement maîtrisé dudit l'élément d'apport d'énergie dans son dispositif de guidage, il est aussi proposé :
- que la bague flottante présente un rebord externe guidé transversalement dans une gorge annulaire intérieure de la bride,
- que le fût de la bride s'évase pour définir un fond de ladite gorge et se prolonge périphériquement par un bord tombé où est fixée une coupelle, de façon que ledit rebord de la bague flottante soit guidé entre ledit fond et la coupelle, et
- que l'évasement du fût de la bride soit situé hors de la bague de fixation.

Un autre aspect concerne en outre la tenue mécanique de ladite première paroi de liaison métallique traversée et la liaison entre cette paroi et la paroi en matériau réfractaire située qu'elle recouvre et qui est elle-même traversée par l'élément d'apport d'énergie considéré. A cette fin, il est proposé que, le long de ladite paroi annulaire en matériau réfractaire recouverte, l'orifice qui traverse ladite première paroi de liaison métallique soit formé dans une première languette de recouvrement qui fait saillie par rapport à une seconde languette de recouvrement :
- faisant elle-même saillie par rapport à une partie de ladite première paroi de liaison métallique qui s'étend circonférentiellement autour dudit premier axe (X), et
- où, de part et d'autre de la première languette de recouvrement, des pions de fixation fixent entre elles, en les traversant, ladite première paroi de liaison métallique et la paroi annulaire en matériau réfractaire qu'elle recouvre.

De façon générale, on doit pouvoir attendre de ce qui précède :
- une réduction de coûts et de masse globale,
- ainsi qu'une meilleure maitrise des tolérances géométriques du foyer.

Par ailleurs, outre la chambre de combustion que l'on vient de présenter, est aussi concernée par l'invention une turbomachine à gaz pour aéronef équipée de cette chambre de combustion.

### Brève description des figures

L'invention sera si nécessaire mieux comprise et d'autres détails, caractéristiques et avantages de l'invention pourront apparaître à la lecture de la description suivante faite à titre d'exemple non limitatif en référence aux dessins annexés où :
- [Fig. 1] est une demi-vue schématique en coupe axiale (axe X) d'un « module de combustion » de turbomachine, comprenant une chambre de combustion conforme à l'invention,
- [Fig. 2] est une vue identique à celle de la figure 1, mais décalée angulairement autour de l'axe X et de la seule chambre de combustion,
- [Fig. 3] est le détail III de la figure 2,
- [Fig. 4] est le détail IV de la figure 1,
- [Fig. 5] montre la zone de la figure 4 avant montage de l'élément d'apport d'énergie et de son dispositif de guidage,
- [Fig. 6] détaille la zone de la figure 5, en coupe partielle et en vue agrandie,
- [Fig. 7] est la même vue que la figure 6, après montage du dispositif de guidage de l'élément d'apport d'énergie, et
- [Fig. 8] est une vue comme la figure 5, mais après montage dudit dispositif de guidage et de l'élément d'apport d'énergie en lui-même.

### Description détaillée de l'invention

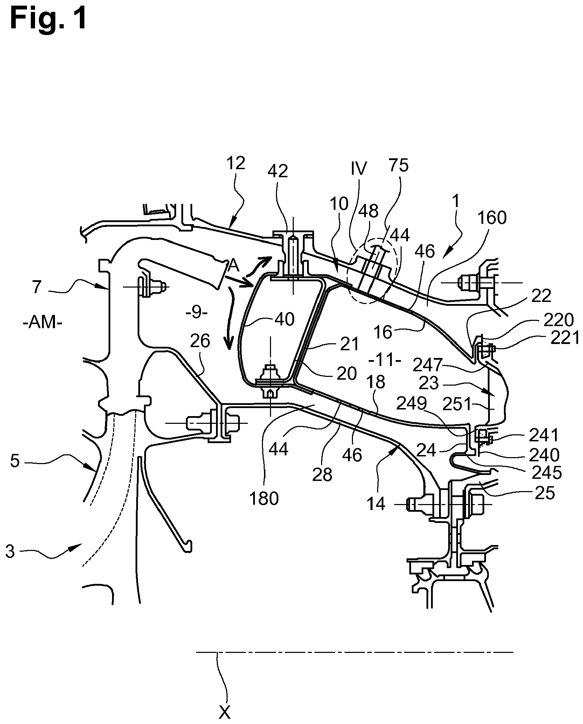

Dans le mode de réalisation de la figure 1, la partie 1 d'une turbomachine pour aéronef présente un espace 9 entourant une chambre de combustion 10 annulaire et qui reçoit un flux d'air A, lequel va, au moins pour partie, alimenter le foyer 11 de la chambre 10. L'espace 9 est délimité entre un carter externe 12 et un carter interne 14, tous deux annulaires, coaxiaux à l'axe X de la turbomachine.

Dans l'espace 9, la partie 1 de la turbomachine comprend un compresseur 3 - qui peut être un compresseur haute pression disposé axialement à la suite d'un compresseur basse pression- dont la partie aval (visible sur la figure) comprend un étage 5 centrifuge, un diffuseur 7 annulaire raccordé en aval du compresseur 3. Le diffuseur 7 débouche dans l'espace 9.

Avec le carter externe 12 et le carter interne 14, ladite partie 1 peut être dénommée « module de combustion ».

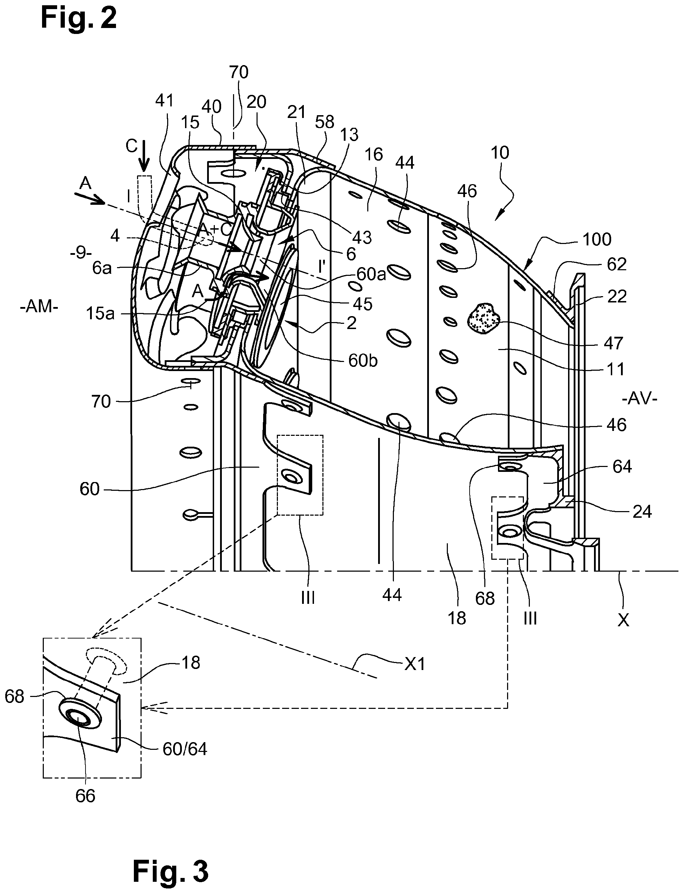

Issu du compresseur 3, l'air (A) comprimé introduit dans la chambre de combustion 10 y est mélangé à du carburant (C) issu d'injecteurs, tels les injecteurs 4 de la figure 2. Les gaz issus de la combustion sont dirigés vers une turbine (ici haute pression) située en aval (AV) de la sortie de la chambre 10, et d'abord vers un distributeur 23 qui est une partie du stator de la turbomachine.

La chambre 10 comprend une paroi externe 16 annulaire et une paroi interne 18 annulaire, toutes deux en matériau réfractaire.

Comme on l'a compris, le carter externe 12, le carter interne 14, l'espace 9, la paroi externe 16 et la paroi interne 18 forment chacun(e) un anneau autour du premier axe X.

Les parois externe 16 et interne 18 ne sont donc pas annulaires autour de chaque axe I-I' qui définit l'axe de chacun des injecteurs 4 permettant d'injecter du carburant dans la chambre de combustion 10.

Les parois annulaires externe 16 et interne 18 sont reliées en amont au fond 21, lui-même donc annulaire autour du premier axe X.

Le fond 21 forme le fond du foyer 11.

La chambre de combustion 10 est maintenue :
- côté amont par des broches 42 fixées au carter externe 12 et aux parois ci-après présentées 58,60 et/ou au FDC 20, et
- côté aval par des brides de fixation.

Par les brides annulaires externe 22 et interne 24 respectivement, et en extrémité aval, la chambre 10 est en appui axial contre des viroles, annulaires externe et interne respectivement, d'un distributeur, ici le distributeur haute pression 23, via des lamelles d'étanchéité 220, 240 liées auxdites brides annulaires externe 22 et interne 24, respectivement. Ces brides appuient axialement contre des pions axiaux 221, 241, respectivement, dont sont équipées les viroles annulaires externe 247 et interne 249. Comme pourrait le faire extérieurement la bride annulaire externe, la bride annulaire radialement interne 24 se prolonge, de façon radialement intérieure par rapport aux lamelles d'étanchéité 240, par un organe d'appui 245 annulaire en forme d'épingle ouverte vers l'aval qui vient en appui contre un carter 25, dit carter support distributeur HP. Entre les viroles annulaires externe et interne du distributeur 23, fixé par ailleurs, s'étendent des pales 251 sensiblement radiales.

On peut par ailleurs considérer que le carter interne 14 qui longe la chambre 10 est défini par, ou comprend, la virole 26 du diffuseur et un voile intermédiaire 28 interne fixé en amont à la virole 26 et en aval au carter 25.

En partie amont (AM), la chambre de combustion 10 peut être fixée par au moins trois broches 42 de fixation circonférentiellement réparties autour de l'axe X, axe autour duquel tournent notamment les aubes mobiles de turbine(s) et de compresseur(s).

Suivant une spécificité de la chambre de combustion 10 ici présentée, la paroi annulaire externe 16, la paroi annulaire interne 18 et le fond 21 annulaire (du foyer 11) formant déflecteur définissent un ensemble monobloc 100 en matériau réfractaire.

Juste en amont du fond 21 du foyer se trouve le fond de chambre 20 annulaire, métallique auquel sont fixés des dispositifs 2 d'injection d'un mélange d'air et de carburant appelés ci-après dispositifs d'injection 2 et circonférentiellement répartis autour de l'axe X.

Cette fixation peut s'opérer par fixation (par bridage) direct(e) de bols 6 prévus sur les dispositifs 2 d'injection.

Chaque dispositif d'injection 2 peut ainsi comprendre un bol 6 qui comprend un venturi 60a et se termine vers le foyer 11 par un divergeant 60b, pour faire éclater le jet de mélange d'air et de carburant reçu.

Suivant la coupe de la figure 2, circonférentiellement décalée et qui passe par l'axe de l'un des dispositifs d'injection 2, on voit que la chambre de combustion 10 comprend donc de tels dispositifs d'injection 2 qui (au moins pour les bols 6) traversent des premières ouvertures 43 de passage formées dans le fond de chambre 20 puis, coaxialement, des secondes ouvertures 45 de passage formées à travers le fond de foyer 21, sans que les (bols 6 des) dispositifs d'injection 2 soient fixés directement avec le fond 21.

Le bol 6, la sortie de carburant qui y est engagée et les premières et secondes ouvertures 43, 45 sont coaxialement centrés sur un axe I-I' qui est parallèle à un axe X1 parallèlement auquel la paroi annulaire externe 16 et la paroi annulaire interne 18 monoblocs en matériau réfractaire s'étendent, globalement.

Un espace intermédiaire 56 sépare le FDC 20 et le fond de foyer 21, suivant cet axe I-I'.

Les bols 6 sont montés serrés (fixés) dans des fourreaux 13 coaxiaux disposés dans les ouvertures 43 et eux-mêmes fixés au FDC 20. Un jeu axial J peut être réservé entre chaque fourreau 13 et le fond de foyer 21. On évitera alors tout contact avec matériau réfractaire, fragile, et métal.

Dans le canal d'entrée 6a du bol 6 de chacun des dispositifs d'injection 2 est monté un injecteur 4 de carburant dont la sortie est, comme le canal 6a, orientée sur axe I-I' correspondant.

Autour de son canal d'entrée 6a, le bol est aussi traversé par une ou plusieurs vrilles 15 d'entrée d'air A.

Les vrilles 15 périphériques peuvent permettre d'introduire dans bol 6 (a priori vers le venturi 60a) et avec un mouvement de giration (flèche 15a) une partie de l'air A reçu de l'espace 9. Un capot annulaire 40 traversé par des ouvertures 41 laissant passer les injecteurs 4 et l'air A vers les bols 6 peut aussi être prévu. Les ouvertures 41 peuvent être chacune coaxiales à un dit axe I-I'.

Pour l'alimentation en air A du foyer 11 par les volumes annulaires 160 et 180 qui existent respectivement :
- entre la paroi externe 16 et le carter externe 12, et
- entre la paroi interne 18 et le carter interne 14,
(les) partie(s) formant les parois interne 18 et/ou externe 16, respectivement, de l'ensemble monobloc 100 peuvent en outre être traversées de trous primaires 44 et/ou de trous de dilution 46 qui débouchent dans le foyer 11. Quelques orifices de multi-perforations 47", pour injecter de d'air de refroidissement dans le foyer, ont aussi été figurés localement. S'ils existent, ils s'étendent sur une beaucoup plus grande surface, comme connu.

Pour une liaison - à contraintes (mécaniques/thermiques) et fabrication maîtrisées - entre l'ensemble monobloc 100 et les pièces métalliques alentours de la turbomachine (si elles existent : broches 42, lamelles 220,240..), il est prévu:
- que, vers l'extrémité amont de la chambre de combustion 10, des premières parois métalliques annulaires de liaison interne 60 et externe 58, respectivement, puissent relier entre eux le FDC 20 et les parois interne 18 et externe 16, respectivement, voire aussi le capot 40 situé donc en amont de ce FDC, et/ou
- que, vers l'extrémité aval de ladite chambre, soient prévues des secondes parois métalliques de liaison interne 64 et externe 62 respectivement, présentant des brides interne 24 et externe 22, respectivement, de liaison:
   -- entre ladite paroi interne 18 et une pièce métallique de reprise d'effort, telle que le carter injecteur 25, et
   -- entre ladite paroi externe 16 et, une partie du DHP (virole annulaire externe 247), et/ou le carter externe 12.

Les parois métalliques de liaison 58,60,62,64 seront des tôles souples, plus déformables que le matériau réfractaire de l'ensemble 10, lorsque la turbomachine fonctionne.

Encore pour ces questions de liaison métal/matériau réfractaire, il est proposé, pour les liaisons entre lesdites parois interne 18 et externe 16 et les parois métalliques de liaison interne 60, 64 et externe 58,62, respectivement, d'utiliser des pions 66 et des rondelles 68 fixés ensemble (par exemple soudés) et traversant des trous ménagés dans les parois respectives.

Par contre, les liaisons entre le FDC 20 (métallique), et respectivement les premières parois métalliques de liaison interne 60 et externe 58 (voire avec aussi le capotage 40 métallique), seront de préférence assurées a priori par des ensembles vis-écrous 70 qui les traverseront. En outre, au moins un double autre orifice de passage 72,74 traverse coaxialement:
- l'une des premières parois de liaison annulaires métalliques respectivement interne 60 et externe 58 (orifice 72), et, en face
- l'une desdites parois annulaires en matériau réfractaire respectivement interne 18 et externe 16 (orifice 74),
pour y disposer un élément d'apport d'énergie 48 qui peut typiquement comprendre une bougie d'allumage ou un injecteur de carburant.

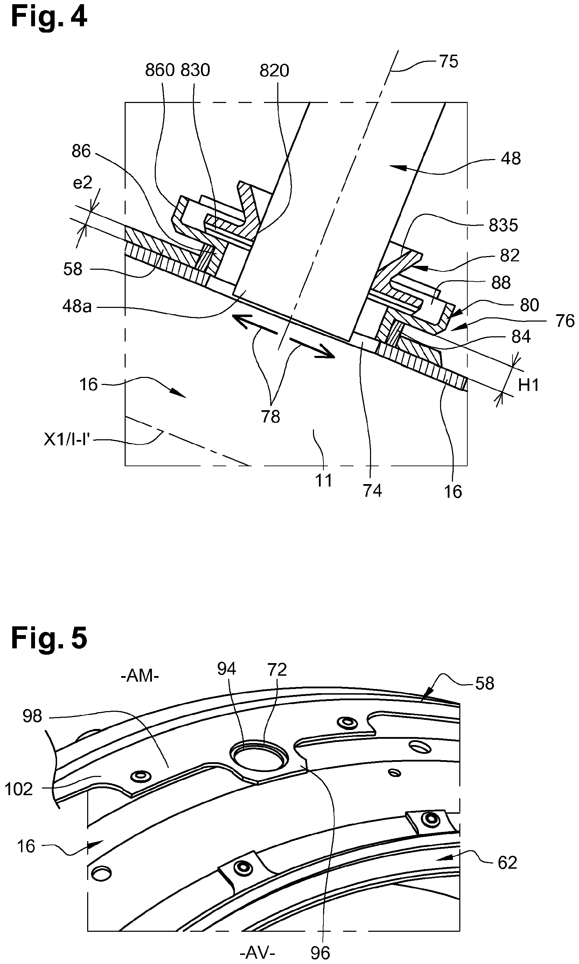

L'extrémité libre 48a de l'élément d'apport d'énergie 48 affleure la face interne de la paroi en matériau réfractaire concernée (16 dans l'exemple), pour communiquer avec le foyer 11 ; figure 4.

Pour faciliter les montages, la paroi 58 recouvrira la paroi 16 et la paroi 60 recouvrira la paroi 18, comme on le voit notamment figures 4 et suivantes pour la paroi 58 vis-à-vis de la paroi 16, dans cet exemple où elles sont traversées par un dit élément 48, globalement suivant leur axe commun 75 qui intersecte l'axe X et qui peut être perpendiculaire à l'axe X1. Ci-après, on considérera par exemple que l'élément 48 est une bougie d'allumage qui débouche par son extrémité interne dans le foyer 11.

De fait, le mélange d'air et de carburant injecté dans le foyer 11 sera enflammé au moyen d'au moins une bougie d'allumage, telle celle 48 qui peut s'étendre radialement à l'axe X1, à l'extérieur de la chambre.

L'extrémité radialement externe de la bougie 48 peut être fixée au carter externe 12 à l'extérieur duquel elle est reliée à des moyens d'alimentation électrique (non représentés). A son extrémité radialement interne (par rapport donc à l'axe X1 où I-I' ; voir figure 4) la bougie 48 est guidée dans les orifices 72,74.

A cet effet, un dispositif 76 de guidage est fixé à l'extérieur de la chambre 10 sur la paroi métallique 58, autour de l'orifice 72 pour compenser les déplacements relatifs entre les parois de la chambre et la bougie 48 pendant le fonctionnement de la turbomachine. Ces déplacements relatifs ont principalement lieu en direction longitudinale, sensiblement parallèlement à l'axe X1 ; voir flèches 78 figure 4.

Le dispositif de guidage 78 est a priori métallique. Il comprend une bride 80 et une bague 82 montée flottante dans la bride 80 pour permettre le déplacement de la bougie 48 sensiblement parallèlement à l'axe I-I', maintenue/calée par un col 820 de la bague flottante. La bague 82 flottante et la bride 80 sont traversées coaxialement (axe 75) par la bougie 48. Pour éviter les interférences avec les parois 16,18 en matériau réfractaire, la bride 80 est fixée frettée (shrink fit) ou par une soudure avec (dans l'exemple) la paroi de liaison métallique externe 58.

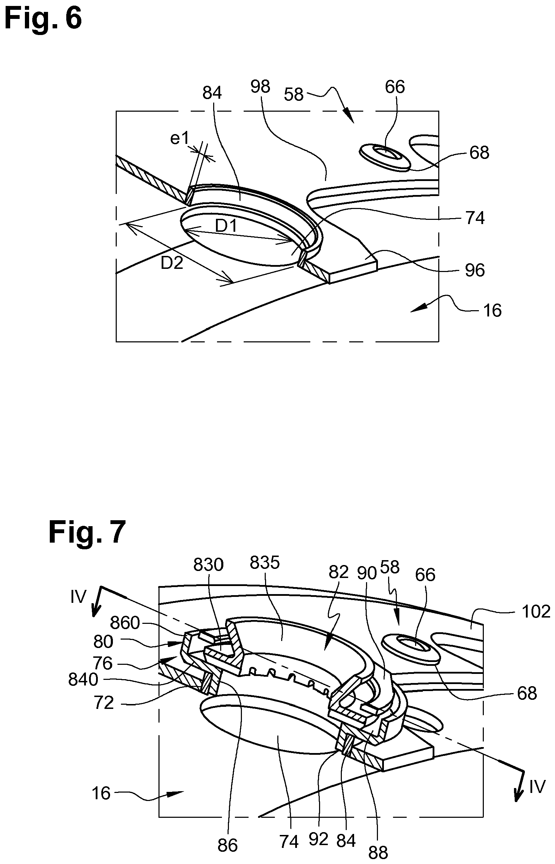

Pour faciliter cette fixation et la sécuriser, il est conseillé d'utiliser une bague intermédiaire de fixation 84, qui pourra être métallique, elle-même fixée par frettage (shrink fit) ou par une soudure à la bride 80 et à ladite paroi de liaison métallique considérée ; la paroi externe 58 dans l'exemple (voir figure 6).

Ainsi, la bague intermédiaire de fixation 84 est disposée étroitement dans l'orifice 72. Elle peut venir en appui contre la paroi 16, juste autour de l'orifice 74.

La bague flottante 82 présente un rebord 830 externe se déplaçant librement, transversalement à l'axe 75 (sensiblement parallèlement à l'axe I-I'), dans une gorge 88 annulaire intérieure de la bride 80.

Le col 820 est à la jonction entre la zone centrale du rebord 830 et celle d'une possible partie tronconique 835 permettant de guider l'engagement initial axial de l'élément 48 dans la bague flottante 82.

La bride 80 peut présenter un fût ou cheminée 86 par lequel elle est fixée à la paroi métallique 58, via donc de préférence la bague intermédiaire de fixation 84 (fixation fût/bague par brasage, soudage de préférence).

Pour former la gorge 88, le fût 84 de la bride :
- s'évase (via un épaulement) pour définir un fond 840 de la gorge 88, et
- se prolonge périphériquement par un bord tombé 860 où est fixée (a priori brasée ou soudée) une coupelle 90, de sorte que le rebord 830 de la bague flottante puisse être guidé entre le fond 840 et la coupelle 90, dans la gorge 88.

L'évasement (donc le fond 840) du fût de la bride est situé hors de la bague de fixation 84 : suivant l'axe 75, au-delà de l'extrémité libre de la bague 84 sur laquelle peut venir reposer le fond 840.

Le fût 86 peut être cylindrique.

Pour un positionnement sécurisé, il est proposé :
- que, parallèlement à l'axe de l'élément 48 et desdits deux orifices 72,74, le fût 86 de la bride 80 s'interrompt à distance de la paroi en matériau réfractaire considérée : espace 92 entre l'extrémité libre du fût et la paroi en regard, 16 dans ce cas ; et/ou
- que l'orifice 72 qui traverse la (dite première) paroi de liaison métallique (58 dans l'exemple) présente un diamètre D1 plus grand que l'est le diamètre D2 de l'orifice 74 qui traverse coaxialement la paroi en matériau réfractaire en regard (16 dans l'exemple) ; voir figure 6. Ainsi, on trouve un appui 94 (figure 5) contre lequel pousser la bague de fixation 84 lors du positionnement avant fixation à la paroi 58.

On pourra par ailleurs souhaiter limiter le débord de la bride 80 dans les orifices 72,74. Pour cela, il est proposé:
- que la bague de fixation 84 présente un diamètre intérieur, un diamètre extérieur et une épaisseur e1 entre les diamètres intérieur et extérieur (figure 6), et
- que la différence de diamètres entre lesdits deux orifices 72,74 (épaulement formé par le rebord 94 figure 5) soit supérieure à l'épaisseur (e) de la bague de fixation 84 : voir figure 6. Et pour faciliter la mise en place de la bride 80, il est en outre proposé que, parallèlement à l'axe 75 desdits deux orifices 72,74, la bague de fixation 84 présente une hauteur (H1) supérieure à l'épaisseur e2 de ladite (première) paroi de liaison métallique correspondante (58 dans l'exemple ; voir figure 6).

De la sorte on pourra prévoir que l'évasement (fond 520) du fût 86 de la bride soit en appui contre la bague de fixation 84, suivant l'axe 75; voir figure 4 ou 7.

La question de la tenue mécanique liée à la présence de l'ensemble monobloc 100 s'est aussi posée vis-à-vis de l'affaiblissement mécanique causé par l'orifice 72 ménagé dans la paroi de liaison métallique concernée : 58 dans l'exemple.

Pour y pallier, il est proposé que, le long de la paroi annulaire en matériau réfractaire recouverte (paroi 16 dans l'exemple), ledit orifice 72 soit formé dans une première languette de recouvrement 96 qui fait saillie vers l'aval par rapport une seconde languette de recouvrement 98 :
- faisant elle-même saillie par rapport à une partie 102 de ladite première paroi de liaison métallique (58 dans l'exemple) qui s'étend donc circonférentiellement autour dudit premier axe X, et
- où, de part et d'autre de la première languette de recouvrement 96, des pions de fixation 66 (maintenus par des rondelles 68) traversent et fixent entre elles ladite première paroi de liaison métallique (58 dans l'exemple) et la paroi annulaire en matériau réfractaire (16 dans l'exemple) qu'elle recouvre.

Cette caractéristique peut s'avérer importante.

Ainsi, on pourra avoir avantage à ce que la (saillie formée par la) première languette de recouvrement 96 :
- ne soit que locale pour permettre la fixation du dispositif de guidage de l'élément d'apport d'énergie (guide-bougie),
- et ne s'étend de la sorte pas de manière continue sur l'ensemble de la circonférence. Ainsi, on réduira les problèmes de poids, de frottements, de dilatation thermique. Favorablement ladite première paroi de liaison métallique (58 dans l'exemple) paroi s'étendra ainsi, axialement :
- sur une première longueur X10, sur l'essentiel de son périmètre autour de l'axe X,
- localement selon une seconde longueur X20 pour permettre sa fixation (sous forme de languette : seconde languette de recouvrement 98), et
- selon une troisième longueur X30, encore plus localement (forme là encore de languette :
   première languette de recouvrement 96) pour permettre la fixation du dispositif de guidage de l'élément d'apport d'énergie.

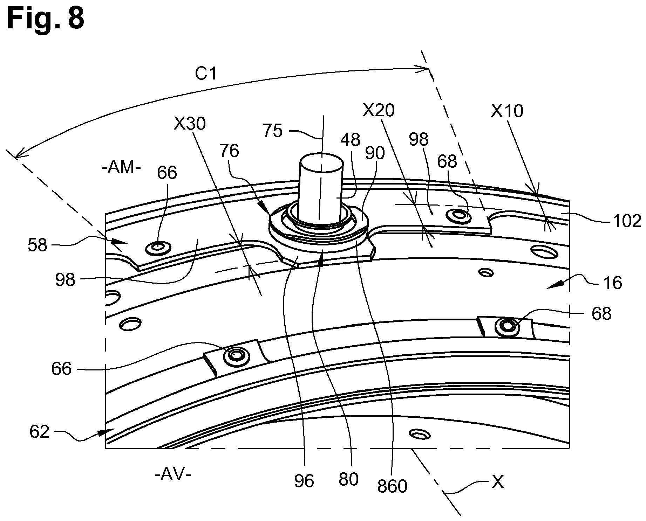

On pourra définir une telle la zone en double saillie axiale de ladite première paroi de liaison métallique comme suit:
axialement (X20 + X30) : entre 1,2 x D2 et 3 x D2 (D2 : diamètre de l'orifice 74),
circonférentiellement (longueurs cumulées C1 des première et seconde languettes de recouvrement 96,98) : entre 6 x D2 et 12 x D2 ; voir figure 8.

Avec une telle réalisation, on réduira notablement le poids et les frottements, sans altérer la résistance mécanique.

Comme on l'a compris, pour disposer l'élément d'apport d'énergie 48 considéré, on pourra donc prolonger localement, vers l'aval, ladite partie 102 totalement circonférentielle de la première paroi de liaison métallique (58 dans l'exemple) devant être traversée par l'orifice 72 de montage :
- d'abord par la seconde languette de recouvrement 98 (circonférentiellement assez longue),
- puis par ladite première languette de recouvrement 96 (circonférentiellement plus courte, environnant de préférence juste l'orifice 72), et qui pourra être circonférentiellement centrée le long de la seconde languette de recouvrement 98 ; voir figure 5 ou 8.

On aura noté que les première et seconde languettes de recouvrement 96, 98 pourront être définies sur une portion de cylindre d'axe parallèle à l'axe X1.

## Revendications

1. Partie de turbomachine à gaz pour aéronef présentant un premier axe (X) et comprenant un carter externe (12), un carter interne (14), tous deux annulaires, coaxiaux audit premier axe (X), un espace (9) entourant une chambre de combustion (10) annulaire autour du premier axe (X), et ladite chambre de combustion (10), l'espace (9) étant délimité entre le carter externe (12) et le carter interne (14), ladite chambre de combustion (10) comprenant :
- des parois en matériau réfractaire, annulaires, respectivement interne (18) et externe (16) radialement au premier axe (X),
- un fond de chambre (20) annulaire s'étendant entre lesdites parois annulaires interne et externe et présentant des premières ouvertures (43) de passage de dispositifs d'injection (2) d'un mélange d'air et de carburant en partie fixés au fond de chambre (20) annulaire,
- des premières parois de liaison métalliques, annulaires, respectivement interne (60) et externe (58) radialement au premier axe (X), auxquelles sont fixées :
-- respectivement lesdites parois en matériau réfractaire (16, 18), et
-- le fond de chambre (20),
- deux orifices (72,74) traversant coaxialement, respectivement :
-- l'une desdites premières parois de liaison métalliques (58, 60), et
-- l'une desdites parois en matériau réfractaire (16, 18) qu'elle recouvre, et
- un dispositif (76) de guidage, pour guider un élément d'apport d'énergie (48) dans lesdits deux orifices (72,74),
où le dispositif (76) de guidage est fixé avec l'une desdites premières parois de liaison métalliques (58, 60).

2. Partie de turbomachine à gaz selon la revendication 1, dans laquelle, pour sa dite fixation, le dispositif de guidage comprend une bride (80) métallique et une bague flottante (82) montée flottante dans la bride (80), la bague flottante et la bride étant adaptées à être traversées coaxialement (75) par l'élément d'apport d'énergie (48), la bride étant fixée avec l'une desdites premières parois de liaison métalliques (58, 60).

3. Partie de turbomachine à gaz selon la revendication 1 ou 2, dans laquelle, pour sa fixation, le dispositif (76) de guidage fixé est fretté ou soudé avec l'une desdites premières parois de liaison métalliques (58, 60).

4. Partie de turbomachine à gaz selon la revendication 2 ou les revendications 2 et 3, qui comprend, pour fixer la bride (80), une bague intermédiaire de fixation (84) :
- fixée à la bride (80) et à l'une desdites premières parois de liaison métalliques (58, 60).

5. Partie de turbomachine à gaz selon la revendication 4, dans laquelle :
- la bride (80) présente un fût (86) parallèle à l'axe desdits deux orifices (72,74) et qui est engagé dans l'orifice (72) de l'une desdites premières parois de liaison métalliques (58, 60), et
- la bague de fixation (84) est fixée, frettée ou par une soudure, avec cette paroi et ledit fût (86), en étant interposée entre eux.

6. Partie de turbomachine à gaz selon la revendication 5 dans laquelle, parallèlement à l'axe (75) desdits deux orifices (72,74), le fût (86) de la bride (80) s'interrompt à distance de ladite une desdites parois en matériau réfractaire (16,18) qui lui fait face.

7. Partie de turbomachine à gaz selon l'une quelconque des revendications précédentes dans laquelle l'orifice (72) présent dans l'une des premières parois de liaison métalliques (58, 60) présente un diamètre (D2) plus grand que le diamètre (D1) de l'orifice (74) présent dans l'une desdites parois en matériau réfractaire (16, 18).

8. Partie de turbomachine à gaz selon la revendication 7 et l'une des revendications 4, 5 ou 6, dans laquelle :
- la bague de fixation (84) présente un diamètre intérieur, un diamètre extérieur et une épaisseur (e1) entre les diamètres intérieur et extérieur, et
- la différence de diamètres (D1, D2) entre lesdits deux orifices (72,74) est supérieure à l'épaisseur (e1) de la bague de fixation.

9. Partie de turbomachine à gaz selon la revendication 5, seule ou en combinaison avec l'une quelconque des revendications 6 à 8 dans laquelle, parallèlement à l'axe (75) desdits deux orifices (72,74), la bague de fixation (84) présente une hauteur (H1) supérieure à la hauteur du fût (86).

10. Partie de turbomachine à gaz selon la revendication 5 seule ou en combinaison avec l'une quelconque des revendications 6 à 9, dans laquelle :
- la bague flottante (82) présente un rebord (830) externe guidé transversalement dans une gorge (88) annulaire intérieure de la bride,
- le fût de la bride (80) s'évase (840) pour définir un fond de ladite gorge et se prolonge périphériquement par un bord tombé (860) où est fixée une coupelle (90), de façon que ledit rebord (830) de la bague flottante soit guidé entre ledit fond et la coupelle, et
- l'évasement (840) du fût (86) de la bride est situé hors de la bague de fixation (84).

11. Partie de turbomachine à gaz selon la revendication 10, dans laquelle l'évasement (840) du fût de la bride (80) est en appui contre la bague de fixation (84).

12. Partie de turbomachine à gaz selon l'une quelconque des revendications précédentes dans laquelle, le long de la paroi en matériau réfractaire recouverte, ledit orifice (72) qui traverse ladite première paroi de liaison métallique (58) est formé dans une première languette de recouvrement (96) qui fait saillie par rapport à une seconde languette de recouvrement (98) :
- faisant elle-même saillie par rapport à une partie (102) de ladite première paroi de liaison métallique qui s'étend circonférentiellement autour dudit premier axe (X), et
- où, de part et d'autre de la première languette de recouvrement (96), des pions de fixation (66,68) fixent entre elles, en les traversant, ladite première paroi de liaison métallique et la paroi en matériau réfractaire qu'elle recouvre.

## Patentansprüche

1. Gasturbinenbauteil für ein Luftfahrzeug, das eine erste Achse (X) aufweist und ein äußeres Gehäuse (12), ein inneres Gehäuse (14), die beide ringförmig und koaxial zur ersten Achse (X) ausgebildet sind, einen Raum (9), der eine ringförmig um die erste Achse (X) verlaufende Brennkammer (10) umgibt, sowie die Brennkammer (10) umfasst, wobei der Raum (9) zwischen dem äußeren Gehäuse (12) und dem inneren Gehäuse (14) begrenzt ist, wobei die Brennkammer (10) umfasst:
- ringförmige Wände aus feuerfestem Material, nämlich eine innere (18) und eine äußere (16), die radial zur ersten Achse (X) verlaufen,
- einen ringförmigen Kammerboden (20), der sich zwischen der inneren und der äußeren ringförmigen Wand erstreckt und erste Öffnungen (43) für den Durchtritt von Einspritzvorrichtungen (2) für ein Gemisch aus Luft und Treibstoff aufweist, die teilweise an dem ringförmigen Kammerboden (20) befestigt sind,
- erste ringförmige Verbindungswände aus Metall, nämlich eine innere (60) und eine äußere (58), die radial zur ersten Achse (X) verlaufen und an denen befestigt sind:
-- die jeweiligen Wände aus feuerfestem Material (16, 18) und
-- der Kammerboden (20),
- zwei Öffnungen (72, 74), die sich koaxial erstrecken durch jeweils
-- eine der ersten metallischen Verbindungswände (58, 60) und
-- eine der Wände aus feuerfestem Material (16, 18), die von der letztgenannten bedeckt wird, und
- eine Führungsvorrichtung (76) zum Führen eines Energiezufuhrelements (48) in den beiden Öffnungen (72, 74),
wobei die Führungsvorrichtung (76) mit einer der ersten metallischen Verbindungswände (58, 60) gesichert ist.

2. Gasturbinenbauteil nach Anspruch 1,
wobei die Führungsvorrichtung zu deren Sicherung einen metallischen Flansch (80) und einen schwimmend gelagerten Ring (82) umfasst, der in dem Flansch (80) schwimmend gelagert ist, wobei der schwimmend gelagerte Ring und der Flansch dazu ausgelegt sind, koaxial (75) von dem Energiezufuhrelement (48) durchdrungen zu werden, wobei der Flansch mit einer der ersten metallischen Verbindungswände (58, 60) gesichert ist.

3. Gasturbinenbauteil nach Anspruch 1 oder 2,
wobei die zu sichernde Führungsvorrichtung (76) zu deren Sicherung mit einer der ersten metallischen Verbindungswände (58, 60) verpresst oder verschweißt ist.

4. Gasturbinenbauteil nach Anspruch 2 oder nach den Ansprüchen 2 und 3, wobei es zum Sichern des Flansches (80) einen Sicherungszwischenring (84) umfasst, der
- an dem Flansch (80) und an einer der ersten metallischen Verbindungswände (58, 60) befestigt ist.

5. Gasturbinenbauteil nach Anspruch 4, wobei
- der Flansch (80) einen Schaft (86) aufweist, der parallel zur Achse der beiden Öffnungen (72, 74) verläuft und in die Öffnung (72) einer der ersten metallischen Verbindungswände (58, 60) eingreift, und
- der Sicherungsring (84) mit dieser Wand und dem Schaft (86) durch Verpressen oder Verschweißen gesichert ist, wobei er zwischen diesen beiden angeordnet ist.

6. Gasturbinenbauteil nach Anspruch 5,
wobei parallel zur Achse (75) der beiden Öffnungen (72, 74) der Schaft (86) des Flansches (80) in einem Abstand von der einen der Wände aus feuerfestem Material (16, 18), die diesem zugewandt ist, endet.

7. Gasturbinenbauteil nach einem der vorhergehenden Ansprüche,
wobei die in einer der ersten metallischen Verbindungswände (58, 60) vorhandene Öffnung (72) einen Durchmesser (D2) aufweist, der größer ist als der Durchmesser (D1) der in einer der Wände aus feuerfestem Material (16, 18) vorhandenen Öffnung (74).

8. Gasturbinenbauteil nach Anspruch 7 und einem der Ansprüche 4, 5 oder 6, wobei
- der Sicherungsring (84) einen Innendurchmesser, einen Außendurchmesser und eine Dicke (e1) zwischen dem Innen- und dem Außendurchmesser aufweist, und
- die Differenz der Durchmesser (D1 , D2) zwischen den beiden Öffnungen (72, 74) größer ist als die Dicke (e1) des Sicherungsrings.

9. Gasturbinenbauteil nach Anspruch 5 allein oder in Kombination mit einem der Ansprüche 6 bis 8,
wobei parallel zur Achse (75) der beiden Öffnungen (72, 74) der Sicherungsring (84) eine Höhe (H1) aufweist, die größer ist als die Höhe des Schafts (86).

10. Gasturbinenbauteil nach Anspruch 5 allein oder in Kombination mit einem der Ansprüche 6 bis 9, wobei
- der schwimmend gelagerte Ring (82) eine äußere Randkante (830) aufweist, die quer in einer ringförmigen Innennut (88) des Flansches geführt ist,
- der Schaft des Flansches (80) sich aufweitet (840), um einen Nutgrund der Nut zu definieren, und in Umfangsrichtung in einen abfallenden Rand (860) übergeht, an dem eine Schale (90) befestigt ist, so dass die Randkante (830) des schwimmend gelagerten Rings zwischen dem Nutgrund und der Schale geführt ist, und
- die Aufweitung (840) des Schafts (86) des Flansches außerhalb des Sicherungsrings (84) liegt.

11. Gasturbinenbauteil nach Anspruch 10,
wobei die Aufweitung (840) des Schafts des Flansches (80) an dem Sicherungsring (84) anliegt.

12. Gasturbinenbauteil nach einem der vorhergehenden Ansprüche,
wobei entlang der bedeckten Wand aus feuerfestem Material die Öffnung (72), die durch die erste metallische Verbindungswand (58) hindurchgeht, in einer ersten Abdeckungszunge (96) ausgebildet ist, die bezüglich einer zweiten Abdeckungszunge (98) vorsteht,
- die ihrerseits bezüglich eines Abschnitts (102) der ersten metallischen Verbindungswand vorsteht, der sich in Umfangsrichtung um die erste Achse (X) herum erstreckt, und
- wobei zu beiden Seiten der ersten Abdeckungszunge (96) die erste metallische Verbindungswand und die Wand aus feuerfestem Material, die von dieser bedeckt wird, mittels diese Wände durchdringender Befestigungsstifte (66, 68) aneinander befestigt sind.

## Claims

1. An aircraft gas turbomachine part having a first axis (X) and comprising an outer casing (12), an inner casing (14), both annular, coaxial with said first axis (X), and a space (9) surrounding an annular combustion chamber (10) about the first axis (X), and said annular combustion chamber (10), the space (9) being delimited between the outer casing (12) and the inner casing (14), said combustion chamber comprising:
- respectively inner (18) and outer (16) annular refractory material walls, radially to the first axis (X),
- an annular chamber bottom (20) extending between said inner and outer annular walls and having first openings (43) for the passage of devices (2) for injecting an air and fuel mixture partly attached to the annular chamber bottom (20),
- first respectively inner (60) and outer (58) annular metal connecting walls, radially to the first axis (X), to which are attached:
-- said refractory material walls (16, 18), respectively, and
-- the chamber bottom (20),
- two ports (72, 74) passing coaxially through, respectively:
-- one of said first metal connecting walls (58, 60), and
-- one of said refractory material walls (16,18) which it covers, and
- a guiding device (76), for guiding an energy feed element (48) into said two ports (72, 74),
where the guiding device (76) is attached with one of said first metal connecting walls (58, 60).

2. The gas turbomachine part according to claim 1, wherein for said attachment, the guiding device comprises a metal flange (80) and a floating bush (82) floatingly mounted in the flange (80), the floating bush and the flange being adapted to have the energy feed element (48) passing coaxially through (75) them, the flange being attached with one of said first metal connecting walls (58, 60).

3. The gas turbomachine part according to claim 1 or 2, wherein, for its attachment, the attached guiding device (76) is shrink fit or welded with one of said first metal connecting walls (58, 60).

4. The gas turbomachine part according to claim 2 or claims 2 and 3, which comprises, for attaching the flange (80), an intermediate attachment bush (84):
- attached to the flange (80) and to one of said first metal connecting walls (58, 60).

5. The gas turbomachine part according to claim 4, wherein:
- the flange (80) has a shank (86) parallel to the axis of said two ports (72, 74) and which is engaged in the port (72) of one of said first metal connecting walls (58, 60), and
- the attachment bush (84) is shrink fit or welded with this wall and said shank (86), by being interposed between them.

6. The gas turbomachine part according to claim 5 wherein, in parallel to the axis (75) of said two ports (72, 74), the shank (86) of the flange (80) is interrupted at a distance from said one of said refractory material walls (16, 18) facing it.

7. The gas turbomachine part according to any of the preceding claims, wherein the port (72) present in one of the first metal connecting walls (58, 60) has a diameter (D2) larger than the diameter (D1) of the port (74) present in one of said refractory material walls (16, 18).

8. The gas turbomachine part according to claim 7 and one of claims 4, 5 or 6, wherein:
- the attachment bush (84) has an internal diameter, an external diameter and a thickness (e1) between the internal and external diameters, and
- the difference in diameters (D1, D2) between said two ports (72, 74) is greater than the thickness (e1) of the attachment bush.

9. The gas turbomachine part according to claim 5, alone or in combination with any of claims 6 to 8 wherein, in parallel to the axis (75) of said two ports (72,74), the attachment bush (84) has a height (H1) greater than the height of the shank (86).

10. The gas turbomachine part according to claim 5 alone or in combination with any of claims 6 to 9, wherein:
- the floating bush (82) has an outer edge (830) guided transversely into an internal annular groove (88) of the flange,
- the shank of the flange (80) flares (840) to define a bottom of said groove and peripherally extends to a flanged edge (860) where a cup (90) is attached, so that said edge (830) of the floating bush is guided between said bottom and the cup, and
- the flare (840) of the shank (86) of the flange is located outside the attachment bush (84).

11. The gas turbomachine part according to claim 10, wherein the flare (840) of the shank of the flange (80) is supported by the attachment bush (84).

12. The gas turbomachine part according to any of the preceding claims wherein, along the covered refractory material wall, said port (72) which passes through said first metal connecting wall (58) is formed in a first covering tab (96) which protrudes relative to a second covering tab (98):
- in turn protruding relative to a part (102) of said first metal connecting wall which extends circumferentially about said first axis (X), and
- where, on either side of the first covering tab (96), attachment pins (66, 68) attach, by passing therethrough, said first metal connecting wall and the refractory material wall which it covers, to each other.
